# EUROPEAN PATENT SPECIFICATION

(11) **EP 3 522 153 B1**
(45) Date of publication and mention of the grant of the patent: **27.12.2023**
(21) Application number: 17854855.8
(22) Date of filing: 26.09.2017
(51) Int. Cl.: G10L 15/14, G10L 15/22

(54) **VOICE CONTROL SYSTEM, WAKEUP METHOD AND WAKEUP APPARATUS THEREFOR, ELECTRICAL APPLIANCE AND CO-PROCESSOR**
SPRACHSTEUERUNGSSYSTEM, AUFWECKVERFAHREN UND AUFWECKVORRICHTUNG DAFÜR, ELEKTROGERÄT UND CO-PROZESSOR
SYSTÈME DE COMMANDE VOCALE, PROCÉDÉ DE RÉVEIL ET APPAREIL DE RÉVEIL ASSOCIÉ, APPAREIL ÉLECTRIQUE ET COPROCESSEUR

(30) Priority: 29.09.2016 CN 201610867477
(43) Date of publication of application: 07.08.2019
(73) Proprietor: Hefei Hualing Co., Ltd., Hefei, Anhui 230601 (CN); Hefei Midea Refrigerator Co., Ltd., Hefei, Anhui 230601 (CN); Midea Group Co., Ltd., Foshan, Guangdong 528311 (CN)
(72) Inventor: WANG, Yan, Anhui 230601 (CN); CHEN, Hailei, Anhui 230601 (CN)
(74) Representative: RGTH
(86) International application number: PCT/CN2017/103514
(87) International publication number: WO 2018/059405

(56) References cited:
- CN-A- 104 464 723
- CN-A- 105 009 204
- CN-A- 105 654 943
- CN-A- 105 912 092
- CN-A- 106 157 950
- US-A- 5 983 186
- US-A- 5 983 186
- US-A1- 2010 292 987
- US-A1- 2014 163 978
- US-A1- 2014 337 031
- US-A1- 2016 189 706

## Description

### CROSS-REFERENCE

The present application claims priority to Chinese Patent Application No. 2016108674779, filed on September 29, 2016, entitled "Voice Control System, Wakeup Method and Wakeup Apparatus Therefor, Electrical Appliance and Co-processor".

### FIELD OF TECHNOLOGY

The present application relates to the field of electrical appliance voice control, and specifically to a voice control system, a wakeup method and wakeup apparatus therefor, an electrical appliance and a co-processor.

### BACKGROUND

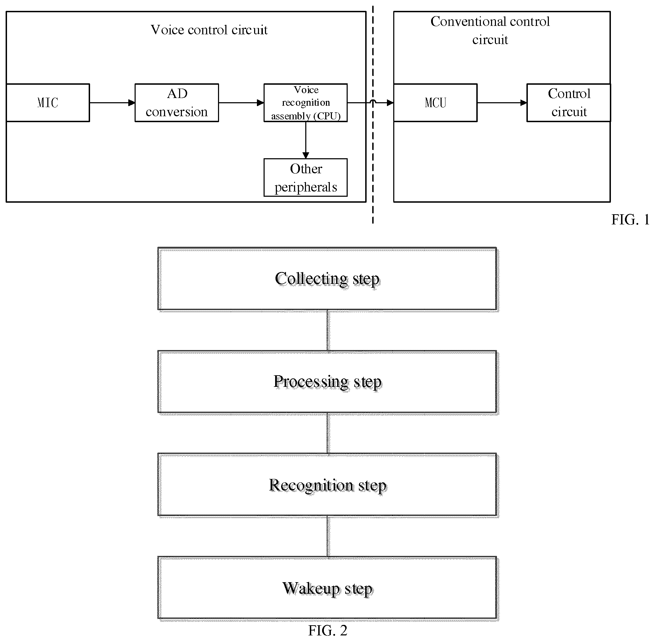

With the development of artificial intelligence technology, the electrical appliance industry has begun to develop newly, wherein human-computer voice interaction has become one of the hot topics of researches because it is more in line with the usage habits of human. FIG.1 shows an electrical appliance circuit with a voice control function. It can be seen from FIG.1 that, in order to add the voice control function, it needs to add a voice control circuit on the conventional control circuit. Since the voice control requires real-time monitoring of external sounds, the recognition processor keeps working, which will increase the power consumption.

US 2014 337031 A1 discloses a method of detecting a target keyword for activating a function in an electronic device is disclosed. The method includes receiving an input sound starting from one of the plurality of portions of the target keyword. The input sound may be periodically received based on a duty cycle. The method extracts a plurality of sound features from the input sound, and obtains state information on a plurality of states associated with the portions of the target keyword.

US 5 983 186 A discloses techniques for implementing adaptable voice activation operations for interactive speech recognition devices and instruments. Specifically, such speech recognition devices and instruments include an input sound signal power or volume detector in communication with a central CPU for bringing the CPU out of an initial sleep state upon detection of perceived voice exceeding a predetermined threshold volume level and is continuously perceived for at least a certain period of time.

### SUMMARY

### (I) Technical problem to be solved

The present application aims to provide a voice control system, a wakeup method and wakeup apparatus therefor, and an electrical appliance, so as to solve the problem that the voice recognition assembly (voice recognition processor CPU) is activated only when there is a human voice and the human voice includes a voice to be recognized.

### (II) Technical solutions

The invention is as defined by the independent claims.

Preferred embodiments are defined by the dependent claims.
In order to solve the above-mentioned technical problem, the present application provides a wakeup method of a voice control system, including:
a collecting step: collecting voice information;
a processing step: processing the voice information to determine whether the voice information includes a human voice, and separating a voice information segment including the human voice when the voice information includes the human voice; and the process entering a recognition step;
the recognition step: performing wakeup word recognition on the voice information segment including the human voice; the process entering a wakeup step when the wakeup word is recognized; and the process returning to the collecting step when the wakeup word is not recognized; and
the wakeup step: waking up a voice recognition processor.

In some embodiments, the voice information includes a plurality of voice information segments collected from different time periods, and all the time periods are spliced into a complete and continuous time chain; and/or,
the collecting step includes:
collecting voice information in an analog signal format;
digitally converting the voice information in the analog signal format to obtain voice information in a digital signal format.

In some embodiments, before the wakeup step, the wakeup method further comprises establishing a wakeup word voice model; and
the recognition step includes matching data including the human voice with the wakeup word voice model; determining that the wakeup word is recognized when the matching succeeds; and determining that the wakeup word is not recognized when the matching fails.

In some embodiments, establishing the wakeup word voice model includes:
collecting wakeup voice data of a number of people;
processing all the wakeup voice data, and obtaining the wakeup word voice model through training.

In some embodiments, establishing the wakeup word voice model includes:
in an off-line state, collecting wakeup words recorded by a speaker in different environments and performing framing processing;
extracting characteristic parameters after framing;
clustering the characteristic parameters, and establishing an observation state of Hidden Markov HMM model;
adjusting a model parameter of the Hidden Markov HMM model by Baum-Welch algorithm to maximize P(σ|λ), wherein λ is the model parameter, σ is the observation state; adjusting the model parameter λ to obtain a maximal probability of the observation state σ;
completing model training and storing the wakeup word voice model;
the recognition step includes:
   extracting characteristic parameters for voice frames including data of the human voice to obtain a set of new observation values σ' as a new observation state, and calculating P(σ'|λ);
   comparing P(σ'|λ) with a confidence threshold to determine whether the wakeup word is recognized.

In some embodiments, the processing step includes:
a first separating step: performing blind-source separation processing on the voice information in the digital signal format so as to separate a voice signal having the largest non-Gaussianity value;
a determining step: determining whether the voice signal includes the human voice through an energy threshold; determining that the voice signal include the human voice when the energy threshold is exceeded, and the process entering a second separating step; determining that the voice signal does not comprise the human voice when the energy threshold is not exceeded, and the process entering the collecting step;
the second separating step: separating the voice information including the human voice to obtain the voice information segment including the human voice.

In some embodiments, in the first separating step, a method used for blind-source separation is an independent component analysis ICA algorithm based on negative entropy maximization, 4th-order kurtosis, or time-frequency transformation.

In another aspect, the present application also provides a co-processor, including:
a processing module configured to process collected voice information to determine whether the voice information includes a human voice; and separate a voice information segment including the human voice when the voice information includes the human voice;
a recognition module configured to perform wakeup word recognition on the voice information segment including the human voice separated by the processing module; and generate a wakeup instruction when the wakeup word is recognized; and a wakeup module configured to wake up a voice recognition processor according to the wakeup instruction.

In some embodiments, the processing module includes a separating unit and a determining unit;
the separating unit is configured to perform blind-source separation processing on the voice information in a digital signal format so as to separate a voice signal having the largest non-Gaussianity value;
the determining unit is configured to determine whether the voice signal includes the human voice through an energy threshold; and separate the voice information including the human voice when the energy threshold is exceeded, so as to obtain a voice information segment including the human voice.

In some embodiments, the recognition module includes a recognition unit and a storage unit; the storage unit is configured to store a wakeup word voice model;
the recognition unit is configured to perform wakeup word matching on the voice information segment including the human voice separated by the determining unit and the wakeup word voice model stored by the storage unit; and generate a wakeup instruction when the matching succeeds.

In some embodiments, establishing the wakeup word voice model includes:
collecting wakeup voice data of a number of people;
processing all the wakeup voice data, and obtaining the wakeup word voice model through training.

In some embodiments, establishing the wakeup word voice model includes:
in an off-line state, collecting wakeup words recorded by a speaker in different environments and performing framing processing;
extracting characteristic parameters after framing;
clustering the characteristic parameters, and establishing an observation state of Hidden Markov HMM model;
adjusting a model parameter of the Hidden Markov HMM model by Baum-Welch algorithm to maximize P(σ|λ), wherein λ is the model parameter, σ is the observation state; adjusting the model parameter λ to obtain a maximal probability of the observation state σ;
completing model training and storing the wakeup word voice model;
the recognition step includes:
   extracting characteristic parameters for voice frames including data of the human voice to obtain a set of new observation values σ' as a new observation state, and calculating P(σ'|λ);
   comparing P(σ'|λ) with a confidence threshold to determine whether the wakeup word is recognized.

In another aspect, the present application further provides a wakeup apparatus of a voice control system, including a voice collecting assembly and the co-processor; wherein,
the voice collecting assembly is configured to collect voice information;
the co-processor is configured to process the voice information collected by the voice collecting assembly to determine whether the voice information includes a human voice; separate a voice information segment including the human voice when the voice information includes the human voice, and perform wakeup word recognition on the voice information segment including the human voice; and wake up a voice recognition assembly when the wakeup word is recognized.

In some embodiments, the voice collecting assembly includes a voice collecting module and an A/D conversion module;
the voice collecting module is configured to collect voice information in an analog signal format;
the A/D conversion module is configured to digitally convert the voice information in the analog signal format to obtain voice information in a digital signal format.

In another aspect, the present application further provides a voice control system, including a voice recognition assembly and the wakeup apparatus; wherein the voice recognition assembly is connected to a co-processor of the wakeup apparatus;
the voice recognition assembly is configured to perform a voice recognition in a working-activated state; and enter a non-working dormant state after the voice recognition;
a transition from the non-working dormant state to the working-activated state of the voice recognition assembly is woken up by the co-processor.

In some embodiments, the voice recognition assembly enters a waiting state before a transition from the working-activated state to the non-working dormant state;
during a set time period, the voice recognition assembly enters the non-working dormant state when the voice recognition assembly is not woken up; and enters the working-activated state when the voice recognition assembly is woken up.

In another aspect, the present application further provides an intelligent electrical appliance, including the voice control system and an electrical appliance; the electrical appliance is connected to the voice control system.

### (III) Advantageous effects

The technical solutions of the present application incorporate the wakeup technology. Using a voice wakeup apparatus as a co-processing apparatus or a pre-processing apparatus, the present application collects voice information in real time, analyzes and recognizes the voice information, and wakes up the voice recognition processor to recognize the voice when the voice is determined to include the wakeup word. In this way, the voice recognition processor only operates when voice recognition is required, avoiding ceaseless all-weather operation, and having significantly reduced energy consumption. And the voice wakeup apparatus only recognizes the wakeup word and does not need to recognize the whole voice, therefore it has low power consumption, and consumes very little energy even in all-weather operation, solving the problem of high power consumption in the existing voice recognition.

### BRIEF DESCRIPTION OF THE DRAWINGS

FIG.1 is a structural diagram of the circuit of the electrical appliance having a voice control function in the prior art;
FIG.2 is a structural diagram of the co-processor according to an embodiment of the present application;
FIG.3 is a structural diagram of the wakeup apparatus of a voice control system according to an embodiment of the present application;
FIG.4 is a structural diagram of the voice control system having a wakeup apparatus according to an embodiment of the present application;
FIG.5 is a flowchart of the wakeup method of a voice control system according to an embodiment of the present application;
FIG.6 is a command recognition model used in the wakeup word recognition according to an embodiment of the present application;
FIG.7 is a flowchart of establishing the wakeup word model according to an embodiment of the present application;
FIG.8 is a flowchart of the recognition of a wakeup word according to an embodiment of the present application;
FIG.9 is a diagram of the state transition of the voice recognition assembly according to an embodiment of the present application.

### DETAILED DESCRIPTION

The specific implementations of the present application will be further described in detail hereinafter with reference to the accompanying drawings and embodiments. The following examples are used to illustrate the present application, but are not intended to limit the scope thereof.

In the description of the present application, it should be noted that unless specifically defined or limited otherwise, the terms "mount", "connect to", and "connect with" should be understood in a broad sense, for example, they may be fixed connections or may be removable connections, or integrated connections; they may be mechanical connections or electrical connections; they may also be direct connections or indirect connections through intermediate mediums, or may be an internal connection of two components.

In order to reduce the power consumption of the voice control circuit in a household appliance, the present application provides a wakeup method for a voice control system, a wakeup apparatus, a voice control system and an intelligent electrical appliance.

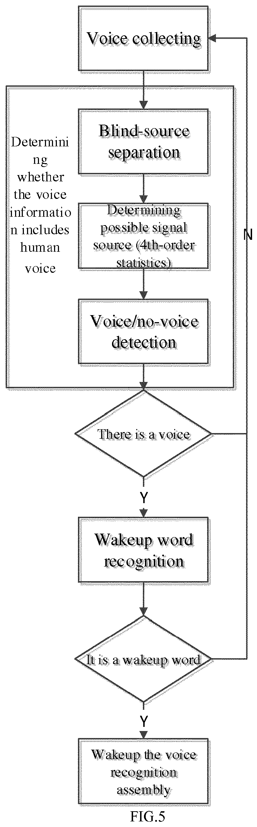

The present application is described in detail hereinafter through basic designs, replacement designs and extended designs:
A co-processor that can reduce the power consumption of voice recognition, as shown in FIG.2, the co-processor is mainly applied to the front end of the existing voice recognition processor for voice processing at an early stage and obtaining a wakeup instruction, thereby waking up the voice recognition processor and shortening the working hours of the voice recognition processor to a time period requiring voice recognition. The co-processor with a small power has less energy loss and can significantly reduce the power consumption. Based on this function, the co-processor mainly includes: a processing module configured to process collected voice information to determine whether the voice information includes a human voice; and separate a voice information segment including the human voice when the voice information includes a human voice; a recognition module configured to perform wakeup word recognition on the voice information segment including the human voice separated by the processing module, when the wakeup word is recognized, generate a wakeup instruction; a wakeup module configured to wake up a voice recognition processor according to the wakeup instruction. The working process thereof can be seen in FIG.5.

Since the collected voices include various sounds in the collecting environment, effectively separating and recognizing the human voice is the first step of subsequent processing. Therefore, the processing module is needed to separate the voice segment including the human voice. However, the content of the voice segment including the human voice includes too much information, and not every message needs to be recognized by voice. Therefore, some specific words included in the voice segment are recognized, and the workload of the existing voice recognition processor can be further reduced by determining whether the voice segment is the information that needs voice recognition through these specific words. Therefore, in the present embodiment, the specific words are defined as the wakeup words, and the voice recognition processor is woken up by the wakeup words.

It should be noted that, in some embodiments, the collected voice information received by the processing module is usually collected and segmented in the form of time period. A voice collecting assembly sends the voice information segment collected in a time period to the processing module as a transmission object, and continues to collect the voices of the next time period. The co-processor can be loaded between the voice collecting assembly and the voice recognition processor as a separate hardware.

The co-processor can be a DSP with low power consumption, and can also be loaded into a chip inside the existing voice recognition processor, or loaded into a chip inside the existing voice collecting assembly. The chip includes the processing module, the recognition module and the wakeup module, and can achieve voice processing and wakeup functions.

The processing module mainly includes a separating unit and a determining unit. The separating unit performs blind-source separation processing on the voice information in the digital signal format so as to separate the voice signal having the largest non-Gaussianity value. The determining unit determines whether the voice signal includes a human voice through an energy threshold; when the energy threshold is exceeded, the voice information including the human voice is separated, and the voice information segment including the human voice is obtained.

The function of blind-source separation is to separate multiple signal sources when the signal sources are unknown. ICA is a relatively common algorithm, which can be implemented based on negative entropy maximization, 4th-order kurtosis, and time-frequency transformation, and fixed-point fast algorithm is easy to implement on DSP in real time.

Since the voice signal obeys the Laplacian distribution, it belongs to the super Gaussian distribution, while the distributions of most of the noises have Gaussian properties. Negative entropy, kurtosis, etc. can measure the non-Gaussianity of the signal. The larger the value, the larger the non-Gaussianity, therefore the signal with the largest value among the signals is selected and separated for processing.

After the possible signals are selected, whether there is a voice of the speaker is determined according to the energy threshold. The frame including the voice is sent to the recognition module for the wakeup word recognition process, and in the subsequent process, the frame that does not include the voice is dropped.

The recognition module includes a recognition unit and a storage unit. The storage unit stores a wakeup word voice model; and the recognition unit performs wakeup word matching on the voice information segment including the human voice separated by the determining unit and the wakeup word voice model stored by the storage unit. If the matching succeeds, a wakeup instruction is generated.

The wakeup word recognition determines whether there is a user tries the voice control according to predetermined wakeup words (from the wakeup word voice model, such as "hello, refrigerator"). The basic process is as follows:
1. Pre-establishing the wakeup word voice model according to the voices of a large number of speakers.
2. Storing the trained wakeup word voice model to solid state storage space (flash), and copying them into a buffer (storage unit) after the power is on.
3. In the voice processing, matching the previously obtained voice information segment including the human voice with the model to obtain the determination on whether it is a wakeup word.
4. Confirming whether it is a wakeup word. When the co-processor detects the wakeup word, an interrupt is generated, and the voice recognition processor is woken up to work; and when the wakeup word is not detected, the voice recognition processor continues to wait for the input of the wakeup command.

The wakeup word voice model can be established as follows: collecting wakeup voice data of a number of people; processing all wakeup voice data, and obtaining the wakeup word voice model through training.

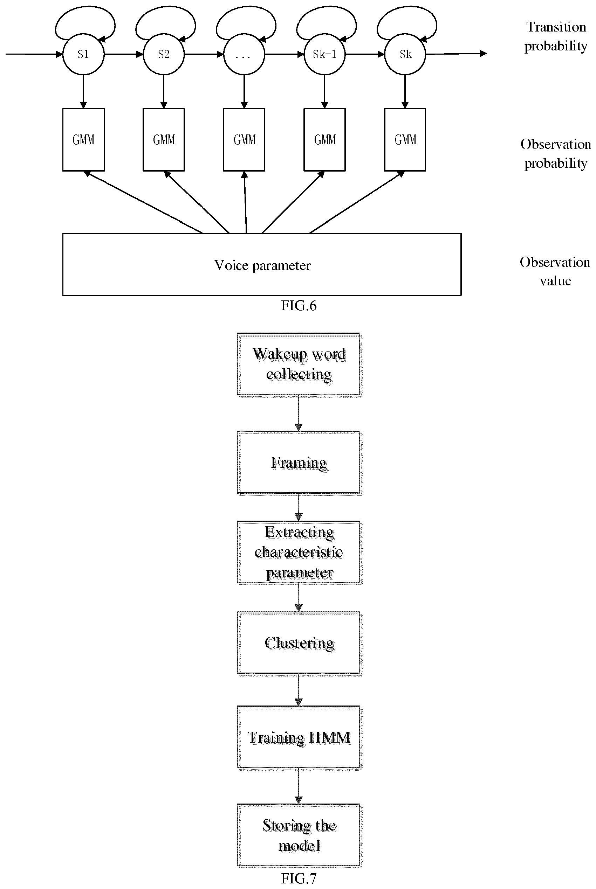

In some embodiments, the wakeup word recognition can be determined by using the more commonly used GMM-HMM model (currently, there also are more commonly used DNN-HMM model and LSTM model). A command recognition model thereof is shown in FIG.6.

The GMM model is for clustering voice frames.

The HMM model can be described with 2 state sets and 3 transition probabilities.

The 2 state sets include observable states O: the states that can be observed; implicit states S: these states conform to the Markov property (the state at time t is only related to the state at time t-1), and generally cannot be observed directly.

Initial state probability matrix: a probability distribution expressing various implicit states in the initial state.

State transition matrix: expressing the transition probability between the implicit states from time t to t+1.

Output probability of observable state: expressing the probability that the observed value is 0 under the condition that the implicit state is S.

There are 3 problems in HMM:
1. Evaluation problem: evaluating the probability of a specific output, given the observation sequence and model. For a command recognition task, it is to confirm the possibility that the sequence is a certain sentence based on the voice sequence and model.
2. Decoding problem: searching for the implied state sequence that maximizes the observation probability, given the observation sequence and the model.
3. Studying problem: adjusting parameters of the model to maximize the probability of generating the observation sequence, given the observation sequence. For the command recognition task, it is to adjust the parameters of the model based on a large number of commands.

In these embodiments, the wakeup word voice model can be specifically established through the follow method, as shown in FIG.7:
in an off-line state, collecting the wakeup words recorded by the speaker in different environments and performing framing processing;
extracting characteristic parameters (such as MFCC, etc.) after framing;
clustering the characteristic parameters through GMM, and establishing the an observation state of the Hidden Markov HMM model;
adjusting a model parameter of the Hidden Markov HMM model by Baum-Welch algorithm to maximize P(σ|λ), wherein λ is the model parameter, σ is the observation state; adjusting the model parameter λ to obtain the maximal probability of the observation state σ; completing the model training and storing the wakeup word voice model.

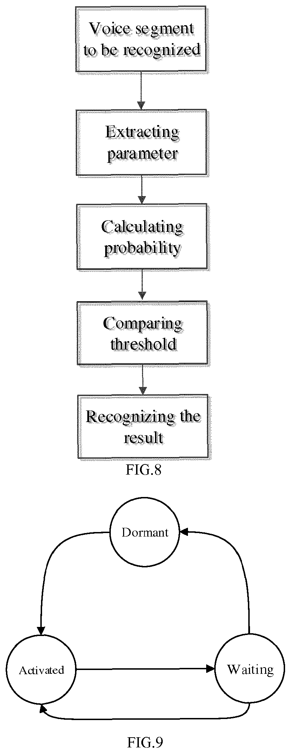

Based on the step of establishing the wakeup words, as shown in FIG.8, the recognition step is:
extracting characteristic parameters for the voice frames including data of the human voice to obtain a set of new observation values σ' as a new observation state, and calculating P(σ'|λ);
comparing P(σ'|λ) with a confidence threshold to determine whether a wakeup word is recognized.

In some cases, the threshold is an empirical value obtained through experiments, and the thresholds need to be set for different wakeup words can be adjusted according to experiments.

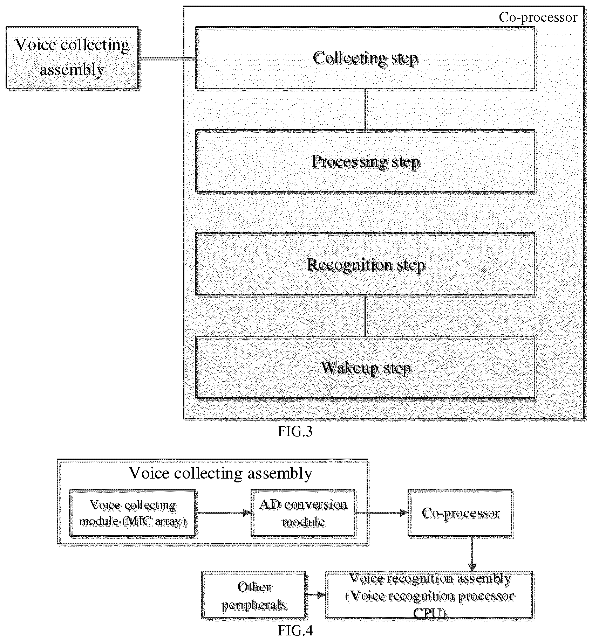

In addition, in order to more comprehensively protect the present application, the wakeup apparatus of the voice control system is also protected, as shown in FIG. 3, the apparatus mainly includes a voice collecting assembly and the above-mentioned co-processor. The voice collecting assembly is configured to collect voice information. The co-processor is configured to process the voice information collected by the voice collecting assembly to determine whether the voice information includes a human voice; separate a voice information segment including the human voice when the voice information includes the human voice and perform wakeup word recognition on the voice information segment including the human voice; and wake up a voice recognition assembly when the wakeup word is recognized.

In some embodiments, especially when developing new products, the voice collecting assembly and co-processor can also be integrated into an integral part. The voice collecting assembly and the co-processor determine whether to wake up the voice recognition processor by collecting and analyzing so as to start voice recognition, therefore the voice collecting assembly and the co-processor can significantly shorten the working hours of the voice recognition processor and reduce the working loss thereof.

In some embodiments, all parts having the voice collecting function can be applied to the voice collecting assembly. The voice collecting assembly mainly includes a voice collecting module and an A/D conversion module; the voice collecting module is configured to collect voice information in an analog signal format; and the A/D conversion module is configured to digitally convert the voice information in an analog signal format to obtain voice information in a digital signal format.

In some embodiments, the voice collecting module and the A/D conversion module can be separate hardware devices or integrated into the integral structure of the voice collecting assembly.

On the other hand, in order to more fully protect the present application, a voice control system is provided, as shown in FIG.4. The voice control system is for voice collecting, voice processing and voice recognition, and obtains the control instruction in the voice through the recognition result. The voice control system mainly includes a voice recognition assembly (i.e. a voice recognition processor) and a wakeup apparatus; wherein the voice recognition assembly is connected to a co-processor of the wakeup apparatus, and the co-processor wakes up the voice recognition assembly to perform the voice recognition after detecting a wakeup word. The voice recognition assembly is configured to perform the voice recognition in a working-activated state; and enter a non-working dormant state after voice recognition. The switch from the non-working dormant state to the working-activated state of the voice recognition assembly is woken up by the co-processor.

Considering that in some cases, voice collecting and voice processing require a certain period of time, and sometimes there are successive multiple wakeup operations, as a result, the voice recognition processor enters a waiting state for a certain period of time after recognizing a voice segment including the human voice. As shown in FIG.9, in the waiting state, the voice recognition processor continues to recognize when there is a voice segment to be recognized; and enters a non-working dormant state when there is no voice segment to be recognized. That is, the voice recognition assembly enters a waiting state before the transition from the working-activated state to the non-working dormant state; the voice recognition assembly enters the non-working dormant state when it is not woken up during a set time period, and enters the working-activated state when it is woken up.

The above-mentioned voice control system is applied to an intelligent electrical appliance, which mainly includes a voice control system and an electrical appliance. The electrical appliance is connected to the voice control system.

The intelligent electrical appliance can be any home appliance that requires control instructions in the home.

At the same time, the present application can also extend the intelligent electrical appliance to electrical equipment in working environment, that is, the electrical equipment that needs to be controlled in other scenarios.

Based on the various protected devices above, the wakeup method of the voice control system mainly used is briefly described as:
The wakeup word recognition determines whether there is a user tries the voice control according to predetermined wakeup words (from the wakeup word voice model, such as "hello, refrigerator"). The basic process is as follows:
1. Pre-establishing the wakeup word voice model according to the voices of a large number of speakers.
2. Storing the trained wakeup word voice model to solid state storage space (flash), and copying them into a buffer (storage unit) after the power is on.
3. In the voice processing, matching the previously obtained voice information segment including the human voice with the model to obtain the determination on whether it is a wakeup word.
4. Confirming whether it is a wakeup word. When the co-processor detects the wakeup word, an interrupt is generated, and the voice recognition processor is woken up to work;
and when the wakeup word is not detected, the voice recognition processor continues to wait for the input of the wakeup command.

As shown in FIG.5, the basic process is detailed as the following steps: Step 100, establishing a wakeup word voice model;

This step is a step that occurs during the preparation of the earlier stage. After the wakeup word voice model is established, the subsequent wakeup word recognition is facilitated. During the establishment of the model, wakeup voice data of a number of people is collected; and all wakeup voice data is processed and trained to obtain the wake-up word voice model.

As shown in FIG.7, the basic process is further detailed as:
in an off-line state, collecting the wakeup words recorded by the speaker in different environments and performing framing processing;
extracting characteristic parameters after framing; clustering the characteristic parameters, and establishing an observation state of the Hidden Markov HMM model;
adjusting a model parameter of the Hidden Markov HMM model by Baum-Welch algorithm to maximize P(σ|λ), wherein λ is the model parameter, σ is the observation state; adjusting the model parameter λ to obtain the maximal probability of the observation state σ; completing the model training and storing the wakeup word voice model.

Step 110, collecting voice information;
The voice information includes a plurality of voice information segments collected from different time periods, and all time periods are spliced into a complete and continuous time chain. The voice information segment of a certain time period is sent to the subsequent processing as a unit. Considering that some voices are collected as analog signals, which is not convenient for the subsequent processing, therefore it is also necessary to add an analog-to-digital conversion step. Therefore, in some embodiments, the step can be detailed as:
Step 1110, collecting voice information in an analog signal format;
Step 1120, digitally converting the voice information in the analog signal format to obtain voice information in a digital signal format.
Step 120, processing the voice information to determine whether the voice information includes a human voice; separating a voice information segment including the human voice when the voice information includes a human voice; and the process entering step 130.

This step is specifically as:
Step 1210, performing blind-source separation processing on the voice information in the digital signal format so as to separate the voice signal having the largest non-Gaussianity value;
In the first separating step, the method used for blind-source separation is: independent component analysis ICA algorithm based on negative entropy maximization, 4th-order kurtosis, or time-frequency transformation.

The function of blind-source separation is to separate multiple signal sources when the signal sources are unknown. ICA is a relatively common algorithm, which can be implemented based on negative entropy maximization, 4th-order kurtosis, and time-frequency transformation, and fixed-point fast algorithm is easy to implement on DSP in real time.

Since the voice signal obeys the Laplacian distribution, it belongs to the super Gaussian distribution, while the distributions of most of the noises have Gaussian properties. Negative entropy, kurtosis, etc. can measure the non-Gaussianity of the signal. The larger the value, the larger the non-Gaussianity, therefore the signal with the largest value among the signals is selected and separated for processing.

Step 1220, determining whether the voice signal includes a human voice through an energy threshold; when the energy threshold is exceeded, the voice signal is determined to include the human voice, and the process enters step 1230; when the energy threshold is not exceeded, the voice signal is determined to do not include the human voice, and the process enters step 110;
After the possible signals are selected, whether there is a voice of the speaker is determined according to the energy threshold. The frame including the voice is sent to the recognition module for the wakeup word recognition process, and in the subsequent process, the frame that does not include the voice is dropped.

Step 1230, separating the voice information including the human voice to obtain the voice information segment including the human voice.

Step 130, performing wakeup word recognition on the voice information segment including the human voice; when the wakeup word is recognized, the process enters step 140; when the wakeup word is not recognized, the process returns to step 110;
matching the data including the human voice with the wakeup word voice model; when the matching succeeds, the wakeup word is determined to be recognized; when the matching fails, the wakeup word is determined to be not recognized.

As shown in FIG.8, the step is specifically as: extracting characteristic parameters for the voice frames including the human voice data to obtain a set of new observation values σ' as a new observation state, and calculating P(σ'|λ);
comparing P(σ'|λ) with a confidence threshold to determine whether a wakeup word is recognized.

Step 140, waking up the voice recognition processor.

The above are only preferred embodiments of the present application, and are not intended to limit the present application.

## Claims

1. A wakeup method of a voice control system, comprising:
a collecting step: collecting voice information;
a processing step: processing the voice information to determine whether the voice information comprises a human voice, and separating a voice information segment comprising the human voice when the voice information comprises the human voice; and the process entering a recognition step;
the recognition step: performing wakeup word recognition on the voice information segment comprising the human voice; the process entering a wakeup step when the wakeup word is recognized; and the process returning to the collecting step when the wakeup word is not recognized; and
the wakeup step: waking up a voice recognition processor
wherein the voice information comprises a plurality of voice information segments collected from different time periods, **characterized in that** all the time periods are spliced into a complete and continuous time chain.

2. The wakeup method of a voice control system of claim 1, **characterized in that** the collecting step comprises:
collecting voice information in an analog signal format;
digitally converting the voice information in the analog signal format to obtain voice information in a digital signal format.

3. The wakeup method of a voice control system of claim 1, **characterized in that**,
before the wakeup step, the wakeup method further comprises establishing a wakeup word voice model; and
the recognition step comprises matching data comprising the human voice with the wakeup word voice model; determining that the wakeup word is recognized when the matching succeeds; and determining that the wakeup word is not recognized when the matching fails.

4. The wakeup method of a voice control system of claim 1, **characterized in that** establishing the wakeup word voice model comprises:
collecting wakeup voice data of a number of people;
processing all the wakeup voice data, and obtaining the wakeup word voice model through training.

5. The wakeup method of a voice control system of claim 3 or 4, **characterized in that**, establishing the wakeup word voice model comprises:
in an off-line state, collecting wakeup words recorded by a speaker in different environments and performing framing processing;
extracting characteristic parameters after framing;
clustering the characteristic parameters, and establishing an observation state of Hidden Markov HMM model;
adjusting a model parameter of the Hidden Markov HMM model by Baum-Welch algorithm to maximize the probability of the observation state P(σ|λ), wherein λ is the model parameter, σ is the observation state; adjusting the model parameter λ to obtain a maximal probability of the observation state σ; completing model training and storing the wakeup word voice model;
the recognition step comprises:
extracting characteristic parameters for voice frames comprising data of the human voice to obtain a set of new observation values σ' as a new observation state, and calculating P(σ'|λ);
comparing P(σ'|λ) with a confidence threshold to determine whether the wakeup word is recognized.

6. The wakeup method of a voice control system of any of claims 1-5, **characterized in that** the processing step comprises:
a first separating step: performing blind-source separation processing on the voice information in a digital signal format so as to separate a voice signal having the largest non-Gaussianity value;
a determining step: determining whether the voice signal comprises the human voice through an energy threshold, determining that the voice signal comprises the human voice when the energy threshold is exceeded, and the process entering a second separating step; determining that the voice signal does not comprise the human voice when the energy threshold is not exceeded, and the process entering the collecting step;
the second separating step: separating the voice information comprising the human voice to obtain the voice information segment comprising the human voice;
wherein preferably in the first separating step, a method used for blind-source separation is an independent component analysis ICA algorithm based on negative entropy maximization, 4th-order kurtosis, or time-frequency transformation.

7. A co-processor, comprising:
a processing module configured to process collected voice information to determine whether the voice information comprises a human voice; and separate a voice information segment comprising the human voice when the voice information comprises the human voice;
a recognition module configured to perform wakeup word recognition on the voice information segment comprising the human voice separated by the processing module; and generate a wakeup instruction when the wakeup word is recognized; and
a wakeup module configured to wake up a voice recognition processor according to the wakeup instruction
wherein the voice information comprises a plurality of voice information segments collected from different time periods, **characterized in that** all the time periods are spliced into a complete and continuous time chain.

8. The co-processor of claim 7, **characterized in that** the processing module comprises a separating unit and a determining unit; wherein
the separating unit is configured to perform blind-source separation processing on the voice information in a digital signal format so as to separate a voice signal having the largest non-Gaussianity value; and
the determining unit is configured to determine whether the voice signal comprises the human voice through an energy threshold; and separate the voice information comprising the human voice when the energy threshold is exceeded, so as to obtain a voice information segment comprising the human voice.

9. The co-processor of claim 7, **characterized in that** the recognition module comprises a recognition unit and a storage unit; wherein
the storage unit is configured to store a wakeup word voice model; and
the recognition unit is configured to perform wakeup word matching on the voice information segment comprising the human voice separated by the determining unit and the wakeup word voice model stored by the storage unit; and generate a wakeup instruction when the matching succeeds;
wherein establishing the wakeup word voice model preferably comprises:
collecting wakeup voice data of a number of people;
processing all the wakeup voice data and, obtaining the wakeup word voice model through training.

10. The co-processor of claim 9, **characterized in that**,
establishing the wakeup word voice model comprises:
in an off-line state, collecting wakeup words recorded by a speaker in different environments and performing framing processing;
extracting characteristic parameters after framing;
clustering the characteristic parameters, and establishing an observation state of Hidden Markov HMM model;
adjusting a model parameter of the Hidden Markov HMM model by Baum-Welch algorithm to maximize P(σ|λ), wherein λ is the model parameter, σ is the observation state; adjusting the model parameter λ to obtain a maximal probability of the observation state σ; completing model training and storing the wakeup word voice model;
the recognition step of the recognition module comprises:
extracting characteristic parameters for voice frames comprising data of the human voice to obtain a set of new observation values σ' as a new observation state, and calculating P(σ'|λ);
comparing P(σ'|λ) with a confidence threshold to determine whether the wakeup word is recognized.

11. A wakeup apparatus of a voice control system, **characterized in** comprising a voice collecting assembly and the co-processor of any of claims 7-10; wherein,
the voice collecting assembly is configured to collect voice information;
the co-processor is configured to process the voice information collected by the voice collecting assembly to determine whether the voice information comprises a human voice; separate a voice information segment comprising the human voice when the voice information comprises the human voice, and perform wakeup word recognition on the voice information segment comprising the human voice; and wake up a voice recognition assembly when the wakeup word is recognized.

12. The wakeup apparatus of a voice control system of claim 11, **characterized in that** the voice collecting assembly comprises a voice collecting module and an A/D conversion module; wherein
the voice collecting module is configured to collect voice information in an analog signal format; and
the A/D conversion module is configured to digitally convert the voice information in the analog signal format to obtain voice information in a digital signal format.

13. A voice control system, **characterized in** comprising a voice recognition assembly and the wakeup apparatus of any of claims 11-12; wherein the voice recognition assembly is connected to a co-processor of the wakeup apparatus;
the voice recognition assembly is configured to perform a voice recognition in a working-activated state, and enter a non-working dormant state after the voice recognition;
a transition from the non-working dormant state to the working-activated state of the voice recognition assembly is woken up by the co-processor.

14. The voice control system of claim 13, **characterized in that** the voice recognition assembly enters a waiting state before the transition from the working-activated state to the non-working dormant state;
during a set time period, the voice recognition assembly enters the non-working dormant state when the voice recognition assembly is not woken up; and enters the working-activated state when the voice recognition assembly is woken up.

15. An intelligent electrical household appliance, **characterized in** comprising the voice control system of claim 13 or claim 14 and an electrical household appliance; the electrical household appliance is connected to the voice control system.

## Patentansprüche

1. Weckverfahren für ein Sprachsteuerungssystem, umfassend:
einen Sammelschritt: Sammeln von Sprachinformationen;
einen Verarbeitungsschritt: Verarbeiten der Sprachinformation, um zu bestimmen, ob die Sprachinformation eine menschliche Stimme umfasst, und Abtrennen eines Sprachinformationssegments, das die menschliche Stimme umfasst, wenn die Sprachinformation die menschliche Stimme umfasst; und
wobei der Prozess einen Erkennungsschritt einleitet;
den Erkennungsschritt: Durchführen einer Weckworterkennung an dem Sprachinformationssegment, das die menschliche Stimme umfasst; wobei der Prozess in einen Weckschritt eintritt, wenn das Weckwort erkannt wird; und der Prozess zum Sammelschritt zurückkehrt, wenn das Weckwort nicht erkannt wird; und
den Weckschritt: Wecken eines Spracherkennungsprozessors wobei die Sprachinformation eine Vielzahl von Sprachinformationssegmenten umfasst, die aus verschiedenen Zeitabschnitten gesammelt wurden, **dadurch gekennzeichnet, dass** alle Zeitabschnitte zu einer vollständigen und kontinuierlichen Zeitkette zusammengefügt sind.

2. Weckverfahren für ein Sprachsteuerungssystem gemäß Anspruch 1, **dadurch gekennzeichnet, dass**
der Sammelschritt Folgendes umfasst:
Sammeln von Sprachinformationen in einem analogen Signalformat;
digitales Umwandeln der Sprachinformationen im analogen Signalformat, um Sprachinformationen in einem digitalen Signalformat zu erhalten.

3. Weckverfahren für ein Sprachsteuerungssystem gemäß Anspruch 1, **dadurch gekennzeichnet, dass**,
das Weckverfahren vor dem Weckschritt ferner ein Erstellen eines Weckwort-Stimmenmodells umfasst; und
der Erkennungsschritt ein Abgleichen von Daten, die die menschliche Stimme umfassen, mit dem Sprachmodell des Weckworts umfasst; Feststellen, dass das Weckwort erkannt wird, wenn der Abgleich erfolgreich ist; und Feststellen, dass das Weckwort nicht erkannt wird, wenn der Abgleich fehlschlägt.

4. Weckverfahren für ein Sprachsteuerungssystem gemäß Anspruch 1, **dadurch gekennzeichnet, dass** das Erstellen des Weckwort-Sprachmodells Folgendes umfasst:
Sammeln der Weck-Sprachdaten einer Reihe von Personen;
Verarbeiten aller Weck-Sprachdaten und Erhalten des Weckwort-Sprachmodells durch Training.

5. Weckverfahren für ein Sprachsteuerungssystems gemäß Anspruch 3 oder 4, **dadurch gekennzeichnet, dass**,
das Erstellen des Weckwort-Sprachmodells Folgendes umfasst:
in einem Offline-Zustand, Sammeln von von einem Sprecher in verschiedenen Umgebungen aufgezeichneten Weckwörtern und Durchführen einer Rahmenverarbeitung;
Extrahieren charakteristischer Parameter nach der Rahmenverarbeitung;
Clustern der charakteristischen Parameter und Erstellen eines Beobachtungszustands des Hidden-Markov-HMM-Modells;
Einstellen eines Modellparameters des Hidden-Markov-HMM-Modells durch den Baum-Welch-Algorithmus, um die Wahrscheinlichkeit des Beobachtungszustands P(σ|λ) zu maximieren, wobei λ der Modellparameter und σ der Beobachtungszustand ist; Einstellen des Modellparameters λ, um eine maximale Wahrscheinlichkeit des Beobachtungszustands σ zu erhalten;
Abschließen des Modelltrainings und Speichern des Weckwort-Sprachmodells; der Erkennungsschritt Folgendes umfasst:
Extrahieren von charakteristischen Parametern für Sprachrahmen, die Daten der menschlichen Stimme umfassen, um einen Satz neuer Beobachtungswerte σ' als einen neuen Beobachtungszustand zu erhalten, und Berechnen von P(σ'|λ);
Vergleichen von P(σ'|λ) mit einer Vertrauensschwelle, um zu bestimmen, ob das Weckwort erkannt wird.

6. Weckverfahren für ein Sprachsteuerungssystem gemäß einem der Ansprüche 1-5, **dadurch gekennzeichnet, dass** der Verarbeitungsschritt Folgendes umfasst:
einen ersten Abtrennungsschritt: Durchführen einer Blindquellenabtrennungsverarbeitung an der Sprachinformation in einem digitalen Signalformat, um ein Sprachsignal aufweisend den größten Nicht-Gaußschen Wert abzutrennen;
einen Bestimmungsschritt: Bestimmen, ob das Sprachsignal die menschliche Stimme umfasst, durch einen Energieschwellenwert, Bestimmen, dass das Sprachsignal die menschliche Stimme umfasst, wenn der Energieschwellenwert überschritten wird, und Eintreten des Prozesses in einen zweiten Abtrennungsschritt; Bestimmen, dass das Sprachsignal nicht die menschliche Stimme umfasst, wenn der Energieschwellenwert nicht überschritten wird, und Eintreten des Prozesses in den Sammelschritt;
den zweiten Abtrennungsschritt: Abtrennen der Sprachinformation, die die menschliche Stimme umfasst, um das Sprachinformationssegment zu erhalten, das die menschliche Stimme umfasst;
wobei bevorzugt im ersten Abtrennungsschritt ein Verfahren, das zur Blindquellenabtrennung verwendet wird, ein ICA-Algorithmus zur Analyse unabhängiger Komponenten ist, der auf negativer Entropiemaximierung, Kurtosis der 4. Ordnung oder Zeit-Frequenz-Transformation basiert.

7. Co-Prozessor, umfassend:
ein Verarbeitungsmodul, das so konfiguriert ist, dass es gesammelte Sprachinformationen verarbeitet, um zu bestimmen, ob die Sprachinformationen eine menschliche Stimme umfassen; und ein Sprachinformationssegment abtrennt, das die menschliche Stimme umfasst, wenn die Sprachinformationen die menschliche Stimme umfassen;
ein Erkennungsmodul, das so konfiguriert ist, dass es eine Weckworterkennung an dem Sprachinformationssegment durchführt, das die durch das Verarbeitungsmodul abgetrennte menschliche Stimme umfasst; und eine Weckanweisung erzeugt, wenn das Weckwort erkannt wird; und
ein Weckmodul, das so konfiguriert ist, dass es einen Spracherkennungsprozessor gemäß der Weckanweisung aufweckt wobei die Sprachinformation eine Vielzahl von Sprachinformationssegmenten umfasst, die aus verschiedenen Zeitabschnitten gesammelt wurden, **dadurch gekennzeichnet, dass** alle Zeitabschnitte zu einer vollständigen und kontinuierlichen Zeitkette zusammengefügt sind.

8. Co-Prozessor gemäß Anspruch 7, **dadurch gekennzeichnet, dass** das Verarbeitungsmodul eine Abtrenneinheit und eine Bestimmungseinheit umfasst, wobei
die Abtrenneinheit so konfiguriert ist, dass sie eine Blindquellenabtrennungsverarbeitung an der Sprachinformation in einem digitalen Signalformat durchführt, um ein Sprachsignal aufweisend den größten Nicht-Gaußschen Wert abzutrennen; und
die Bestimmungseinheit so konfiguriert ist, dass sie durch einen Energieschwellenwert bestimmt, ob das Sprachsignal die menschliche Stimme umfasst; und die Sprachinformation, die die menschliche Stimme umfasst, abtrennt, wenn der Energieschwellenwert überschritten wird, um ein Sprachinformationssegment zu erhalten, das die menschliche Stimme umfasst.

9. Co-Prozessor gemäß Anspruch 7, **dadurch gekennzeichnet, dass** das Erkennungsmodul eine Erkennungseinheit und eine Speichereinheit umfasst, wobei
die Speichereinheit so konfiguriert ist, dass sie ein Weckwort-Sprachmodell speichert; und
die Erkennungseinheit so konfiguriert ist, dass sie einen Weckwortabgleich mit dem Sprachinformationssegment durchführt, das die von der Bestimmungseinheit abgetrennte menschliche Stimme und das von der Speichereinheit gespeicherte Weckwort-Sprachmodell umfasst; und eine Weckanweisung erzeugt, wenn der Abgleich erfolgreich ist;
wobei das Erstellen des Weckwort-Sprachmodells bevorzugt Folgendes umfasst:
Sammeln der Weck-Sprachdaten einer Reihe von Personen;
Verarbeiten aller Weck-Sprachdaten und Erhalten des Weckwort-Sprachmodells durch Training.

10. Co-Prozessor gemäß Anspruch 9, **dadurch gekennzeichnet, dass**,
das Erstellen des Weckwort-Sprachmodells Folgendes umfasst:
in einem Offline-Zustand, Sammeln von von einem Sprecher in verschiedenen Umgebungen aufgezeichneten Weckwörtern und Durchführen einer Rahmenverarbeitung;
Extrahieren charakteristischer Parameter nach der Rahmenverarbeitung;
Clustern der charakteristischen Parameter und Erstellen eines Beobachtungszustands des Hidden-Markov-HMM-Modells;
Einstellen eines Modellparameters des Hidden-Markov-HMM-Modells durch den Baum-Welch-Algorithmus, um P(σ|λ) zu maximieren, wobei λ der Modellparameter und σ der Beobachtungszustand ist; Einstellen des Modellparameters λ, um eine maximale Wahrscheinlichkeit des Beobachtungszustands σ zu erhalten; Abschließen des Modelltrainings und Speichern des Weckwort-Sprachmodells;
der Erkennungsschritt des Erkennungsmoduls Folgendes umfasst:
Extrahieren von charakteristischen Parametern für Sprachrahmen, die Daten der menschlichen Stimme enthalten, um einen Satz neuer Beobachtungswerte σ' als einen neuen Beobachtungszustand zu erhalten, und Berechnen von P(σ'|λ);
Vergleichen von P(σ'|λ) mit einer Vertrauensschwelle, um zu bestimmen, ob das Weckwort erkannt wird.

11. Weckvorrichtung eines Sprachsteuerungssystems, **dadurch gekennzeichnet, dass** sie eine Sprachsammelanordnung und den Co-Prozessor gemäß einem der Ansprüche 7-10 umfasst, wobei
die Sprachsammelanordnung so konfiguriert ist, dass sie Sprachinformationen sammelt;
der Co-Prozessor so konfiguriert ist, dass er die von der Sprachsammelanordnung gesammelten Sprachinformationen verarbeitet, um zu bestimmen, ob die Sprachinformationen eine menschliche Stimme umfassen; ein Sprachinformationssegment, das die menschliche Stimme umfasst, abtrennt, wenn die Sprachinformationen die menschliche Stimme umfassen, und eine Weckworterkennung an dem Sprachinformationssegment, das die menschliche Stimme umfasst, durchführt; und eine Spracherkennungsanordnung aufweckt, wenn das Weckwort erkannt wird.

12. Weckvorrichtung eines Sprachsteuerungssystems gemäß Anspruch 11, **dadurch gekennzeichnet, dass** die Sprachsammelanordnung ein Sprachsammelmodul und ein A/D-Wandlermodul umfasst, wobei
das Sprachsammelmodul so konfiguriert ist, dass es Sprachinformationen in einem analogen Signalformat sammelt; und
das A/D-Wandlermodul so konfiguriert ist, dass es die Sprachinformationen im analogen Signalformat digital umwandelt, um Sprachinformationen in einem digitalen Signalformat zu erhalten.

13. Sprachsteuerungssystem, **dadurch gekennzeichnet, dass** es eine Spracherkennungsanordnung und die Weckvorrichtung gemäß einem der Ansprüche 11 bis 12 umfasst, wobei die Spracherkennungsanordnung mit einem Co-Prozessor der Weckvorrichtung verbunden ist;
die Spracherkennungsanordnung so konfiguriert ist, dass sie eine Spracherkennung in einem arbeitenden aktivierten Zustand durchführt und nach der Spracherkennung in einen Ruhezustand übergeht, in dem sie nicht arbeitet;
ein Übergang vom nicht arbeitenden Ruhezustand in den arbeitenden aktivierten Zustand der Spracherkennungsanordnung durch den Co-Prozessor aufgeweckt wird.

14. Sprachsteuerungssystem gemäß Anspruch 13, **dadurch gekennzeichnet, dass** die Spracherkennungsanordnung in einen Wartezustand eintritt, bevor der Übergang vom arbeitenden aktivierten Zustand in den nicht arbeitenden Ruhezustand erfolgt;
während eines festgelegten Zeitabschnitts die Spracherkennungsanordnung in den nicht arbeitenden Ruhezustand eintritt, wenn die Spracherkennungsanordnung nicht aufgeweckt wird, und in den arbeitenden aktivierten Zustand eintritt, wenn die Spracherkennungsanordnung aufgeweckt wird.

15. Intelligentes elektrisches Haushaltsgerät, **dadurch gekennzeichnet, dass** es das Sprachsteuerungssystem gemäß Anspruch 13 oder Anspruch 14 und ein elektrisches Haushaltsgerät umfasst; das elektrische Haushaltsgerät mit dem Sprachsteuerungssystem verbunden ist.

## Revendications

1. Méthode de réveil d'un système de commande vocale, comprenant : une étape de collecte : collecte d'informations vocales ; une étape de traitement : traiter les informations vocales pour déterminer si les informations vocales comprennent une voix humaine, et séparer un segment d'informations vocales comprenant la voix humaine lorsque les informations vocales comprennent la voix humaine; et le processus comprend une étape de reconnaissance; l'étape de reconnaissance : effectuer la reconnaissance du mot de réveil sur le segment d'information vocale comprenant la voix humaine ; le processus entre dans une étape de réveil lorsque le mot de réveil est reconnu ; et le processus retourne à l'étape de collecte lorsque le mot de réveil n'est pas reconnu ; et l'étape de réveil : réveiller un processeur de reconnaissance vocale les informations vocales comprennent une pluralité de segments d'informations vocales collectées à partir de différentes périodes de temps, **caractérisées par le fait que** toutes les périodes de temps sont réunies en une chaîne temporelle complète et continue.

2. Méthode de réveil d'un système de commande vocale selon la revendication 1, **caractérisée en ce que** l'étape de collecte comprend: la collecte d'informations vocales dans un format de signal analogique; convertir numériquement les informations vocales dans le format de signal analogique pour obtenir des informations vocales dans un format de signal numérique.

3. Méthode de réveil d'un système de commande vocale selon la revendication 1, **caractérisée en ce que**, avant l'étape de réveil, la méthode de réveil comprend en outre l'établissement d'un modèle vocal de mot de réveil ; et l'étape de reconnaissance consiste à faire correspondre les données comprenant la voix humaine avec le modèle vocal du mot de réveil ; à déterminer que le mot de réveil est reconnu lorsque la correspondance est réussie ; et à déterminer que le mot de réveil n'est pas reconnu lorsque la correspondance échoue.

4. La méthode de réveil d'un système de commande vocale de la revendication 1, **caractérisée en ce que**, l'établissement du modèle vocal du mot de réveil comprend la collecte des données vocales de réveil d'un certain nombre de personnes ; traiter toutes les données vocales de réveil et obtenir le modèle vocal du mot de réveil par l'entraînement.

5. La méthode de réveil d'un système de commande vocale de la revendication 3 ou 4, **caractérisée par le fait que**, l'établissement du modèle vocal de mot de réveil comprend : dans un état hors ligne, collecter des mots de réveil enregistrés par un locuteur dans différents environnements et effectuer un traitement de cadrage ; l'extraction de paramètres caractéristiques après le cadrage ; le regroupement des paramètres caractéristiques et l'établissement d'un état d'observation du modèle HMM de Markov caché ; ajuster un paramètre de modèle du modèle HMM de Markov caché par l'algorithme de Baum-Welch pour maximiser la probabilité de l'état d'observation P(*σ*|*λ*), , dans lequel λ est le paramètre de modèle, σ est l'état d'observation ; ajuster le paramètre de modèle λ pour obtenir une probabilité maximale de l'état d'observation σ; achever l'apprentissage du modèle et stocker le modèle vocal de mot de réveil ; l'étape de reconnaissance comprend : l'extraction de paramètres caractéristiques pour les trames vocales comprenant des données de la voix humaine afin d'obtenir un ensemble de nouvelles valeurs d'observation σ' en tant que nouvel état d'observation, et le calcul P(σ'|λ) ; la comparaison de P(σ'|λ) avec un seuil de confiance pour déterminer si le mot de réveil est reconnu.

6. Méthode de réveil d'un système de commande vocale selon l'une des revendications 1 à 5, **caractérisée par le fait que** l'étape de traitement comprend : une première étape de séparation : effectuer un traitement de séparation aveugle des sources sur les informations vocales dans un format de signal numérique de manière à séparer un signal vocal ayant la plus grande valeur de non gaussianité ; une étape de détermination : déterminer si le signal vocal comprend la voix humaine par le biais d'un seuil d'énergie, déterminer que le signal vocal comprend la voix humaine lorsque le seuil d'énergie est dépassé, et le processus entre dans une deuxième étape de séparation ; déterminer que le signal vocal ne comprend pas la voix humaine lorsque le seuil d'énergie n'est pas dépassé, et le processus entre dans l'étape de collecte ; la deuxième étape de séparation : séparer les informations vocales comprenant la voix humaine pour obtenir le segment d'informations vocales comprenant la voix humaine ; dans lequel, de préférence, lors de la première étape de séparation, une méthode utilisée pour la séparation aveugle des sources est un algorithme d'analyse en composantes indépendantes ICA basé sur la maximisation de l'entropie négative, l'aplatissement de 4e ordre ou la transformation temps-fréquence.

7. Un coprocesseur comprenant : un module de traitement configuré pour traiter les informations vocales collectées afin de déterminer si les informations vocales comprennent une voix humaine ; et séparer un segment d'informations vocales comprenant la voix humaine lorsque les informations vocales comprennent la voix humaine ; un module de reconnaissance configuré pour effectuer une reconnaissance de mots de réveil sur le segment d'informations vocales comprenant la voix humaine séparée par le module de traitement ; et générer une instruction de réveil lorsque le mot de réveil est reconnu ; et un module de réveil configuré pour réveiller un processeur de reconnaissance vocale en fonction de l'instruction de réveil les informations vocales comprennent une pluralité de segments d'informations vocales collectées à partir de différentes périodes de temps, **caractérisées par le fait que** toutes les périodes de temps sont réunies en une chaîne temporelle complète et continue.

8. Le coprocesseur de la revendication 7, **caractérisé en ce que** le module de traitement comprend une unité de séparation et une unité de détermination ; dans lequel l'unité de séparation est configurée pour effectuer un traitement de séparation aveugle des sources sur les informations vocales dans un format de signal numérique de manière à séparer un signal vocal ayant la plus grande valeur de non-gaussianité ; et l'unité de détermination est configurée pour déterminer si le signal vocal comprend la voix humaine par le biais d'un seuil d'énergie ; et pour séparer les informations vocales comprenant la voix humaine lorsque le seuil d'énergie est dépassé, afin d'obtenir un segment d'informations vocales comprenant la voix humaine.

9. Le coprocesseur de la revendication 7, **caractérisé par le fait que** le module de reconnaissance comprend une unité de reconnaissance et une unité de stockage ; dans lequel
l'unité de stockage est configurée pour stocker un modèle vocal de mot de réveil ; et l'unité de reconnaissance est configurée pour effectuer une correspondance de mot de réveil sur le segment d'information vocale comprenant la voix humaine séparée par l'unité de détermination et le modèle vocal de mot de réveil stocké par l'unité de stockage ; et générer une instruction de réveil lorsque la correspondance est réussie ; dans lequel l'établissement du modèle vocal de mot de réveil comprend de préférence: la collecte des données de voix de réveil d'un certain nombre de personnes ; le traitement de toutes les données vocales de réveil et l'obtention du modèle vocal de mot de réveil par l'entraînement.

10. Le coprocesseur de la revendication 9, **caractérisé par le fait que**, l'établissement du modèle vocal de mot de réveil comprend : dans un état hors ligne, collecter des mots de réveil enregistrés par un locuteur dans différents environnements et effectuer un traitement de cadrage ; l'extraction de paramètres caractéristiques après le cadrage ; le regroupement des paramètres caractéristiques et l'établissement d'un état d'observation du modèle HMM de Markov caché ; ajuster un paramètre de modèle du modèle HMM de Markov caché par l'algorithme de Baum-Welch pour maximiser P(σ|λ), où λ est le paramètre de modèle, σ est l'état d'observation ; ajuster le paramètre de modèle λ pour obtenir une probabilité maximale de l'état d'observation σ; terminer l'apprentissage du modèle et stocker le modèle vocal de mot de réveil ; l'étape de reconnaissance du module de reconnaissance comprend : l'extraction de paramètres caractéristiques pour les trames vocales comprenant des données de la voix humaine afin d'obtenir un ensemble de nouvelles valeurs d'observation σ' en tant que nouvel état d'observation, et calculer P(σ'|λ) ; la comparaison de P(σ'|λ) avec un seuil de confiance pour déterminer si le mot de réveil est reconnu.

11. Appareil de réveil d'un système de commande vocale, **caractérisé en ce qu'**il comprend un ensemble de collecte vocale et le coprocesseur de l'une des revendications 7 à 10 ; dans lequel, l'ensemble de collecte vocale est configuré pour collecter des informations vocales ; le coprocesseur est configuré pour traiter les informations vocales recueillies par l'ensemble de collecte vocale afin de déterminer si les informations vocales comprennent une voix humaine ; séparer un segment d'informations vocales comprenant la voix humaine lorsque les informations vocales comprennent la voix humaine, et effectuer la reconnaissance du mot de réveil sur le segment d'informations vocales comprenant la voix humaine ; et réveiller un ensemble de reconnaissance vocale lorsque le mot de réveil est reconnu.

12. L'appareil de réveil d'un système de commande vocale de la revendication 11, **caractérisé par le fait que** l'ensemble de collecte vocale comprend un module de collecte vocale et un module de conversion A/N ; dans lequel le module de collecte vocale est configuré pour collecter des informations vocales dans un format de signal analogique ; et le module de conversion A/N est configuré pour convertir numériquement les informations vocales dans le format de signal analogique afin d'obtenir des informations vocales dans un format de signal numérique.

13. Système de commande vocale, **caractérisé en ce qu'**il comprend un ensemble de reconnaissance vocale et l'appareil de réveil de l'une des revendications 11 à 12 ; dans lequel l'ensemble de reconnaissance vocale est connecté à un coprocesseur de l'appareil de réveil ; l'ensemble de reconnaissance vocale est configuré pour effectuer une reconnaissance vocale dans un état de fonctionnement activé, et entrer dans un état de dormance non fonctionnel après la reconnaissance vocale ; une transition de l'état dormant non fonctionnel à l'état actif de l'ensemble de reconnaissance vocale est réveillée par le coprocesseur.

14. Le système de commande vocale de la revendication 13, **caractérisé par le fait que** l'ensemble de reconnaissance vocale entre dans un état d'attente avant la transition de l'état activé à l'état dormant non actif ; pendant une période déterminée, l'ensemble de reconnaissance vocale entre dans l'état dormant non fonctionnel lorsque l'ensemble de reconnaissance vocale n'est pas réveillé ; et entre dans l'état fonctionnel activé lorsque l'ensemble de reconnaissance vocale est réveillé.

15. Appareil électroménager intelligent, **caractérisé en ce qu'**il comprend le système de commande vocale de la revendication 13 ou de la revendication 14 et un appareil électroménager;
l'appareil électroménager est connecté au système de commande vocale.
